Europäisches Patentamt

European Patent Office

Office européen des brevets

(19)

(11) Publication number: 0 185 330
A2

## (12) EUROPEAN PATENT APPLICATION

(21) Application number: 85115927.7

(22) Date of filing: 13.12.85

(51) Int. Cl.⁴: G 01 N 35/06

(30) Priority: 18.12.84 US 683264
18.12.84 US 683066

(43) Date of publication of application:
25.06.86 Bulletin 86/26

(84) Designated Contracting States:
AT BE CH DE FR GB IT LI NL SE

(71) Applicant: CETUS CORPORATION
1400 Fifty-Third Street
Emeryville California 94608(US)

(72) Inventor: Hewett, Gary Everett
4561 C. Horton Street
Emeryville, Ca. 94608(US)

(72) Inventor: Leath, Richard Alan
1136 The Alameda
Berkeley, Ca. 94707(US)

(72) Inventor: Widunas, Joseph Thomas
1364 Henry Street
Berkeley, Ca. 94709(US)

(72) Inventor: Tuttle, Craig James
4933 Rocky Road
El Sobrante, Ca. 94803(US)

(72) Inventor: Wennberg, Timothy J.
3416 Madera
Oakland, Ca. 94619(US)

(72) Inventor: Mezei, Louis Michael
40815 Ondina Court
Fremont, Ca. 94539(US)

(74) Representative: Vossius Vossius Tauchner Heunemann Rauh
Siebertstrasse 4 P.O. Box 86 07 67
D-8000 München 86(DE)

(54) Multi-sample liquid handling system.

(57) A multi-sample liquid handling system (10) performs multiple assays on each of a plurality of samples. The system includes a table (16) for supporting one or more multi-well trays (18,20,22) and a vertically shiftable head assembly (24) mounted above the table (16) and carrying a row of fixed-position pipettes (60) for dispensing assay liquid simultaneously into a row of wells in a tray. The table (16) is horizontally shiftable, along a path extending in a front-to-back direction, to position a selected row of tray wells below the pipettes (60). Also included in the system (10) is a rotatable sample holder (26) mounted for rotation adjacent one side of the table (16). A sample-transfer pipette (34) mounted on the head assembly (24) is shiftable in a side-to-side direction for transferring successive samples in the holder (26) to each of a group of wells in a row of a tray (18,20,22). The system (10) has an optical sensor (100) for sensing the liquid level in each sample tube (28,30,32) to allow sample withdrawal at predetermined levels within the individual sample tubes (28,30,32).

./...

FIG.1.

our ref.: T 845 EP
Case: 2194 and 2198
CETUS CORPORATION
Emeryville, Ca., USA

December 13, 1985    0185330

1

## MULTI-SAMPLE LIQUID HANDLING SYSTEM

The present invention relates to liquid-handling devices, and in particular, to such a device for use in performing multiple assays on each of a plurality of samples.

Often in clinical laboratories, it is necessary to perform multiple biochemical assays on each of a number of individual blood and urine samples. For example, in blood banking, blood samples from each of a number of donors are typed by performing a battery of cell agglutination assays. As another example, clinical or hospital patients may be routinely tested for blood and/or urine levels of sugar, nitrogen, cholesterol, specific blood enzymes and the like, each patient sample therefore being analysed by multiple assays.

It is desirable, of course, to perform such assays as quickly and efficiently as possible, and this is usually best done by employing automated or semi-automated equipment to carry out sample-transfer and assay procedures. Heretofore, a number of automated or semi-automated liquid handling devices designed for use in laboratory assay procedures have been developed.

Although the device can be operated to perform a variety of liquid-handling tasks, it cannot efficiently carry out multiple, repetitive liquid-handling tasks, such as dispensing a preselected quantity of reagent or reagents to each well in a multi-well tray, since the reagents have to be dispensed individually, rather than in groups, in the sample wells. Also, the individual blood or serum samples themselves, which are usually obtained in sample tubes having relatively large, variable sample volumes, would have to be hand-dispensed into the assay wells.

A related type of liquid-handling device has a bidirectional pipette (shiftable in both x and y horizontal directions) which can be operated to transfer samples from sample tubes in one tube rack to those in another. This device additionally includes a liquid-sensing probe carried at the end of the pipette for detecting fluid level in the sample tubes from which liquid is to be withdrawn. The device, although it allows for transfer of samples from tubes containing relatively large and variable sample volumes, is relatively inefficient in a multi-assay operation involving multiple samples. Part of the inefficiency is due to the need to wash the transfer pipette after each sample-transfer operation, to avoid cross-contaminating samples. The washing step is both time-consuming, and can result in undesired sample-dilution effects. Also, like the bidirectional liquid handling system described above, the device is designed to transfer assay reagent material to assay tubes on an individual basis, rather than simultaneously to several tubes.

Another type of liquid-handling device known, and one designed particularly for blood typing, has a liquid manifold assembly which allows a single sample (e.g., a blood sample) to be transferred simultaneously from a sample tube to each of a number of assay tubes carried at preselected positions in a rotating tube holder. The manifold assembly includes a sample-transfer pipette and multiple flexible tubing segments connecting the pipette to each of a number of sample-dispensing ports. The manifold is also constructed for dispensing several different assay reagents (e.g., those used in blood-type assays) simultaneously to the sample-containing tubes. The reagents are also carried through flexible tubing segments from individual reagent reservoirs to the manifold. Sample and reagent material is dispensed by means of a peristaltic pump constructed to accomodate the multiple tubing segments. One drawback in this system is the need to flush sample material out of the tubing segments after each sample transfer, a relatively time-consuming operation which can also lead to sample dilution effects. Another disadvantage is the difficulty in accurately dispensing small sample volumes by means of a peristaltic pump acting on multiple tubing segments.

U.S. Patent No. 4,478,094 discloses an automated liquid handling device having a horizontally shiftable table, for holding multi-well trays, and a vertically shiftable pipette assembly which provides a plurality of side-by-side pipettes. The device is operable to withdraw preselected liquid volumes from one row of wells in a tray and dispense the samples simultaneously into another row in the same or a different tray, upon shifting of the table. The pipettes are equipped with disposible pipette tips which are picked up and released automatically before and after each liquid transfer operation. The device thus allows several different assay reagents to be dispensed simultaneously into a group of wells in a tray, and allows different reagents or samples to be handled successively without having to wash out the pipettes between steps. However, the device is limited to small-volume samples and can perform liquid transfers only in the direction of table shifting, i.e., along paths extending in a front-to-back direction.

As suggested above, one of the important clinical applications of automatic liquid handling devices is in blood typing, which requires multiple assays on both blood serum and red blood cell fractions. Therefore, in an automated system for use in blood typing, it is desirable to provide for automated withdrawal of both fractions. In the usual case, blood samples are prepared for typing by centrifuging, to separate the blood into an upper serum fraction and a lower blood-clot fraction. Alternatively the blood may be treated with an anti-coagulant, such as EDTA, to produce, upon centrifugation, an upper plasma fraction and a lower packed-cell fraction. With the centrifuged blood samples placed in a suitable sample holder, the liquid-handling device must be able to withdraw sample volumes from each of the two fractions and dispense each into a different group of assay wells. The device must therefore have the capability of sensing, for each sample, the transfer-pipette positions at which serum (or plasma) and blood-clot (or packed cell) fractions can be withdrawn.

Heretofore, one type of liquid-level sensor which has been proposed includes a probe designed to sense resistivity changes as the probe is lowered into a sample tube. The probe may be responsive to resistivity changes both at the upper liquid level and at the interface between the two fractions in a centrifuged blood sample. A disadvantage of a probe of this type is the need to wash the probe tip after each sample transfer to prevent sample contamination.

4  0185330

Another challenge in an automated clinical system for performing multiple assays on each of a number of samples is to provide a "tracking" method which matches each of the plural samples with the corresponding assay results. It is particularly important in blood typing to match correctly blood-typing results with correct sample donor or recipient, since donor mismatches arising out of mistakes in blood type identification are often fatal.

It is a general object of the invention to provide, in an automated liquid handling system capable of performing multiple assays on each of a number of individual samples, increased efficiency and accuracy and reduced risk of error over systems known in the art.

Related objects of the invention are to provide such a system having advantages of:

(a) rapid and efficient transfer of material from each of a number of samples to several assay wells;

(b) simultaneous transfer of several different assay reagents to groups of assay wells;

(c) automated sample withdrawal from variable-volume sample tubes, including serum (or plasma) and blood-clot (or packed-cell) fractions in blood samples, preferably by optical sensing; and

(d) electronic tracking of sample number and assay results.

In particular, the invention relates to a liquid-handling system having a horizontally shiftable table for supporting a multi-row array of assay wells, means for shifting the table to selected liquid-transfer positions, a vertically shiftable head assembly carrying plural fixed position pipettes for transferring preselected liquid volumes to the wells in a row in such array, and means for shifting the head assembly to selected liquid-handling positions, characterized in that the system contains an apparatus for use in performing multiple assays on each of a plurality of samples characterized by

a shiftable sample holder adapted to hold an array of such samples,

means for shifting the sample holder to place successive samples held therein at a selected sample-transfer position,

a sample-transfer pipette mounted on said head assembly for shifting between such sample transfer position and positions adapted for dispensing the sample successively into one or more of the wells in such an array,

means for shifting the sample-transfer pipette between such positions, and

controlling means operatively connected to the shifting means for the table, head assembly, sample holder, and sample-transfer pipette, to effect transfer of a selected volume of each said sample to one or more selected wells in the well array, with such supported on the table.

The drive elements for shifting the table, the head assembly, the sample holder and the sample-transfer pipette to selected positions during operation of the system preferably include digitally controlled stepper motors. The drive elements are preferably operatively connected to a microprocessor, which operates in a preselected manner to carry out specified automated liquid-transfer operations.

A preferred system includes, for use in performing assays on multiple, variable-volume samples, an optical sensor for detecting the approximate level of each sample in the holder. The sensor is operatively connected to the microprocessor to control the position of the head assembly, during a sample-transfer operation, to withdraw samples at one or more selected positions within each sample tube.

A preferred embodiment also includes sample tube and assay tray bar-code readers, which operate through the microprocessor to provide electronic tracking of sample tube numbers and associated assay results.

The invention is also directed to a liquid-handling system adapted to transfer an upper fraction and a lower blood-cell fraction from each of a plurality of blood samples contained in sample tubes at various sample levels, by means of a sample-transfer pipette whose tip is shiftable to a selected level within each sample tube, characterized in that the system has a tip-positioning mechanism characterized by

a sensor for detecting the upper liquid level in each sample tube,

means for calculating, for each sample, based on the detected level in a sample, and on a preselected upper/lower fraction ratio, the approximate interface level between the upper and lower fractions in the sample, and

means for shifting said pipette, in response to information about such interface level, to position the pipette tip a selected distance below such interface level.

Figure 1 is a perspective view of a liquid-handling system constructed according to the invention;

Figure 2 is an enlarged side and sectional view of the system taken generally along the stepped section line 2-2 in Figure 1;

Figure 3 is a front view of the system, taken generally along line 3-3 in Figure 1;

Figure 4 shows, in plain view, portions of a sample-tube holder and a horizontally shiftable table in the system;

Figures 5-8 illustrate various moved positions of a sample-transfer pipette in the system as it operates: to pick up a disposable pipette tip (Figure 5); to withdraw an upper-fraction sample from a sample tube and dispense aliquots of the sample into a series of wells in a multi-well tray (Figure 6); to withdraw a lower-fraction sample from the sample tube and dispense aliquots of this sample into another series of wells in the tray (Figure 7); and to eject the disposable pipette tip following sample transfer (Figure 8); and

Figures 9 and 10 are flow diagrams showing operation of the system in executing a series of sample-transfer operations and in tracking corresponding sample tube and tray row numbers.

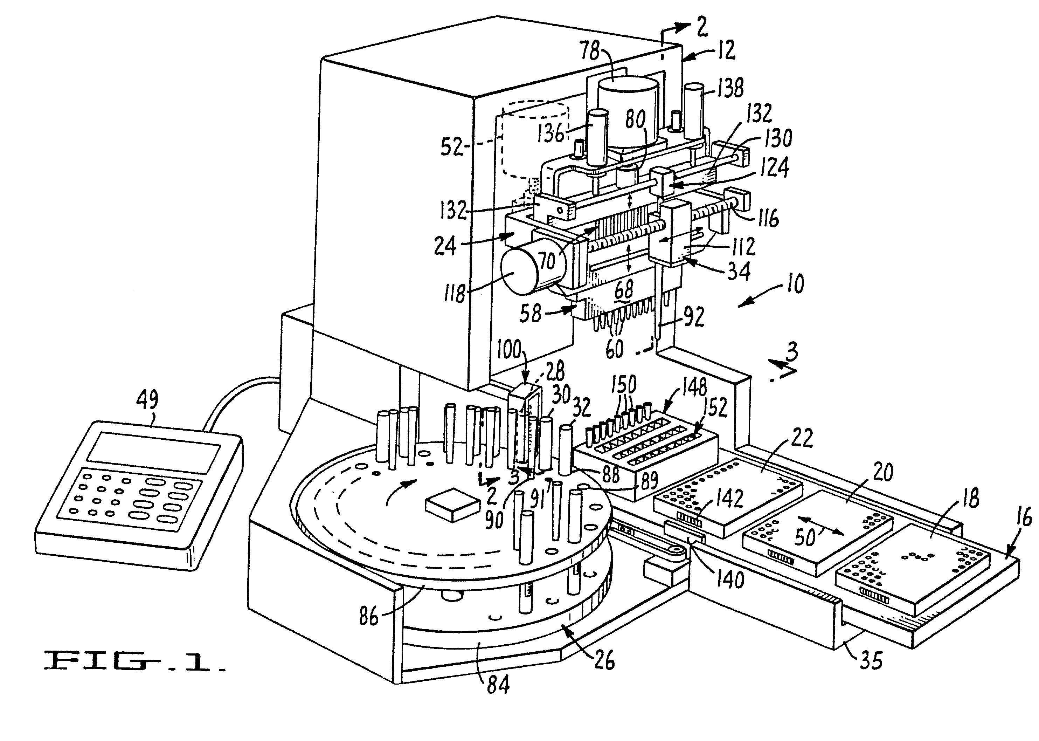

Figure 1 shows an automated liquid-handling system 10 constructed according to the present invention. The system generally includes a liquid-handling device 12, and apparatus 14 for use with the liquid-handling device for performing multiple assays on each of a number of samples. Device 12 has two main moving parts: a horizontal shiftable table 16 for supporting one or more trays, such as trays 18, 20, and 22, and a head assembly 24 which is shiftable vertically toward and away from the table. Apparatus 14 also includes two main moving parts: a shiftable sample holder 26, for supporting a plurality of sample tubes, such as tubes 28, 30, and 32; and a sample-transfer pipette 34 which is shiftable between positions overlying holder 26 and table 16, to transfer sample aliquots from the sample tubes to assay wells in the trays on table 16.

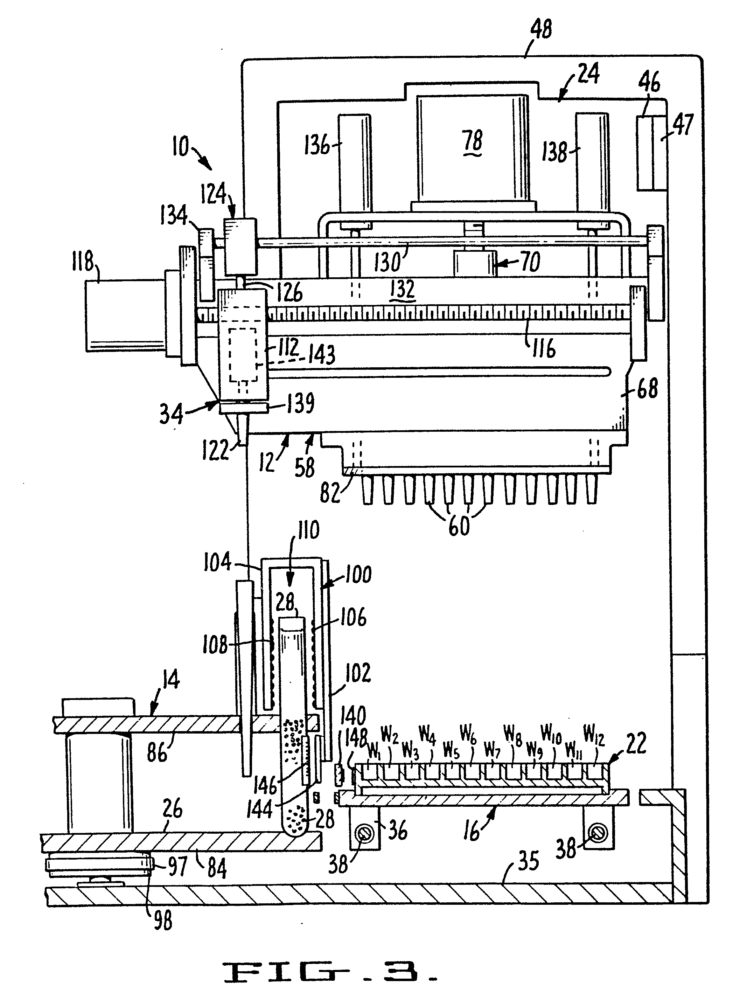

The construction of device 12 will be considered with particular reference to Figures 1-4. Table 16 is mounted for shifting on a stationary frame 35 by means of slide bearings 36 carried on frame-mounted guide rods 38 (Figure 3). Translation of the table is provided by a stepper motor 40 acting on the table through a spool and flexible belt linkage shown generally at 42 in Figure 4, alongside table 16 as shown. The motor is operable to shift the table in a path extending in a front-to-back direction (in the direction of arrow 50 in Figure 1) to place the table at selected liquid-transfer positions below the head assembly. Motor 40 and the belt linkage connecting the motor to the table is also referred to herein as table-shifting means. Although motor 40 and the other motors described herein are stepper motors, other suitable motors, such as DC servo motors, may also be used.

The stepper motor is under the control of digitized impulses supplied to the motor from an electronic control unit 46 shown in Figure 3 mounted within a cover 48. A microprocessor 47 in the control unit is constructed, according to known microprocessor design, for executing the control unit functions to be described herein. The system has a user input terminal 49 (Figure 1) by which detailed program instructions can be provided to the control unit's microprocessor. Specific sample handling and assay reagent operations which are available will be considered below. Microprocessor 47 is also referred to herein as means for controlling the operation of the system.

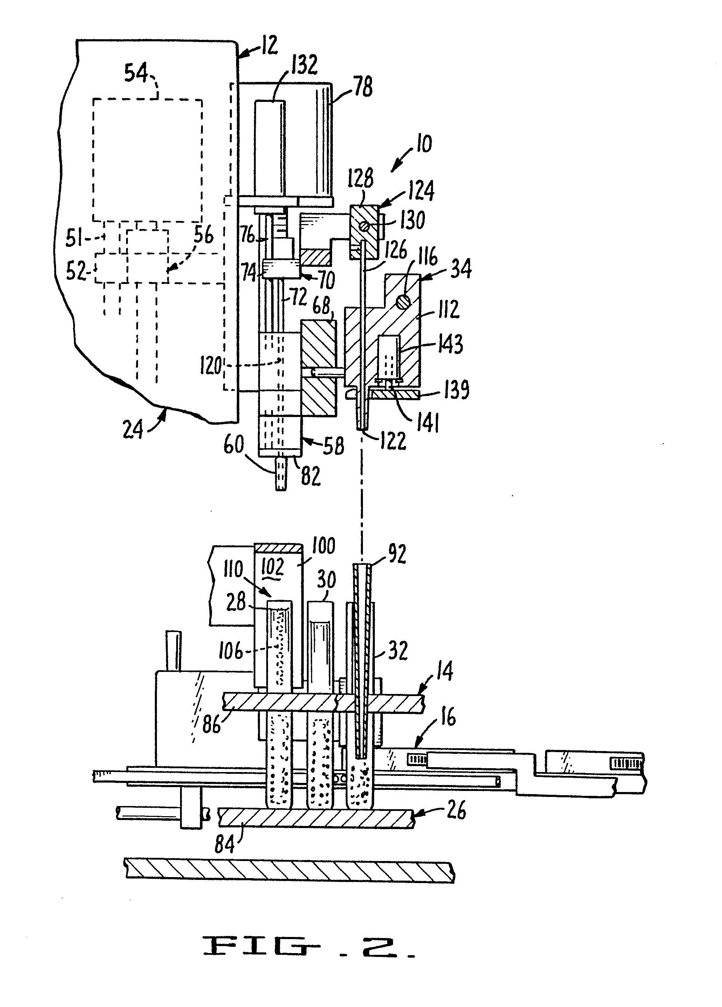

Head assembly 24 is similarly mounted for vertical translation on vertical guide rods by means of slide bearings, such as rod 51 and bearing 52 seen in dotted lines in Figure 2. Translation of the head assembly is provided by a stepper motor 54 (Figure 2) mechanically linked to the assembly through a ball screw drive mechanism, indicated generally at 56. Stepper motor 54, like motor 40, is actuated by digitized impulses from unit 46, to advance the motor a preselected distance in a given direction, to provide accurate control of the vertical position of the head assembly. Motor 54, and the mechanical linkage between the motor and head assembly, are also referred to herein, collectively, as assembly-shifting means.

With reference to Figures 1-3, head assembly 24 supports a pipette assembly 58 which includes a row of twelve pipettes, such as pipettes 60, arranged in a row extending transverse with respect to the axis of translation of table (in a side-to-side direction). The pipettes are attached to the head assembly by means of a mounting block 68. Also included in the pipette assembly is a plunger mechanism 70 which is mounted on the head assembly for vertical movement relative to the pipettes. The plunger mechanism provides a series of plunger rods, one for each pipette, such as rods 72 associated with pipette 60 (Figure 2). The rods are mounted on a common actuator bar 74 which itself is slideably mounted on a pair of guide rods, such as rod 76, for vertical shifting under the control of a stepper motor 78 (Figures 1 and 2). The motor is mechanically linked to the actuator through a ball screw drive linkage 80 seen in Figure 1. Translation of the plunger rods, under the control of motor 78, changes the internal volume of the pipettes, causing fluid to be aspirated into or expelled from the pipettes coordinately.

The pipette assembly has a solenoid-actuated bar 82 (Figures 2 and 3) which is operated to release disposable pipette tips carried by friction fit on the ends of the pipettes. Detailed constructional features of the pipette assembly, and the operation thereof, to pick up and eject disposable pipette tips automatically, before and after withdrawing and dispensing selected volumes of liquid, simultaneously in all pipettes, are described in the above-referenced U.S. Patent 4,478,094.

Turning now to a description of apparatus 14, holder 26 is constructed of a pair of spaced circular plates 84, 86, the upper one of which is provided with a circular array of openings, such as openings 88, 89 (Figures 1, 4) for receiving and supporting an array of sample tubes as shown. An inner array of smaller openings, such as openings 90, 91 (Figure 1), formed in the upper plate, in one-to-one correspondence with the array of sample tube openings, are adapted to receive and support an array of disposable pipette tips, such as tip 92, which will be described below with reference to Figure 2.

With reference to Figure 4, the tube holder is rotatable, to place successive sample tubes in the holder at a selected sample-transfer position 96, by stepper motor 94. The sample-transfer position, which is occupied by tube 32 in Figure 4, is the position at which a sample tube is aligned with the path of travel of sample transfer pipette 34, this path being indicated by dash-dot line 95. The stepper motor is mechanically linked to the tube holder through an endless belt 97 which encircles an axial pulley 98 on the underside of the holder. Motor 94 is operatively connected to and controlled by unit 46, to advance the holder in rotational increments corresponding to the distance between adjacent openings in the holder. Stepper motor 94 and the mechanical linkage connecting the motor to the tube holder is also referred to herein as means for shifting the holder to a preselected sample-transfer position.

An optical sensor 100 in apparatus 24 is mounted on frame 35 adjacent the tube holder, as seen best in Figure 3. The sensor has a bracket-like construction which provides an outer leg 102 attached to frame 35 and extending above plate 86 in the holder, and an inner leg 104 which terminates near the plate's upper surface. Leg 102 carries a column of light-emitting elements, such as the elements 106, which act to direct light toward the confronting, inner side of leg 104. Elements 106 are conventional optical electronic elements, such as light-emitting diodes. Positioned opposite these elements, on the inner side of leg 104, is a corresponding column of photo-detecting elements, such as elements 108. Each of these elements is responsive to light received from the column of light-emitting elements on leg 102, to generate a voltage pulse which is proportional to the amount of light received. Each column of light-emitting and light-detecting elements extends from positions adjacent the top of a sample tube positioned between the two legs, to positions corresponding approximately to the mid region of the tube, as seen in Figure 3, defining therebetween a sensing station 110 at which the level of liquid in an upper portion of the tube within the station is monitored. As seen in Figure 4, the sensing station, which is occupied in the figure by tube 28, is two positions "ahead of" the sample-transfer position--that is, the tube in the sensing station is moved into the sample-transfer station with two incremental moves of the tube holder in a clockwise direction in the figure.

The photo-detector elements on leg 104 are connected to the control unit microprocessor, which receives digitized voltage level information from the elements, and from the combined information, determines the liquid level in the sample tube in the station. The operation in the microprocessor for determining liquid level involves a series of comparator steps in which the voltage level from each photodetecting element is compared with those of adjacent detectors, according to known image-array processing techniques. The sensor is also referred to herein as sensor means.

With reference particularly to Figures 1-3, sample transfer pipette 34 in apparatus 14 is attached to the head assembly by means of a mounting block 112. This block is mounted on the head assembly for shifting in a side-to-side direction through a worm-screw drive mechanism which includes a worm-screw 116 received in a threaded bore in the mounting block, and a stepper motor 118 which is operable to rotate the screw in a selected direction, over a given rotational distance, to shift the pipette between selected liquid-transfer

0185330

positions. The stepper motor operates under the control of digitized signals received from control unit 46. The pipette drive mechanism is also referred to herein as pipette shifting means.

Pipette 34 is formed of an interior vertical bore 120 extending through the mounting block, and a lower fitting 122 projecting from the lower face of the block and forming an extension of the bore. The fitting is dimensioned and tapered at its lower end for friction-fit insertion into the upper tapered bore of a disposable sample-transfer pipette tip, such as tip 92, as can be appreciated from Figure 2. In a sample-handling operation, sample material is in contact with the disposable tip only, and the pipette itself remains uncontaminated by the successive samples being handled.

Sample liquid is withdrawn into and dispensed from the pipette tip on the pipette by a plunger mechanism shown at 124. The plunger mechanism operates by shifting a pipette plunger 126 up or down within the pipette bore to create internal-volume pressure changes needed to draw liquid into or dispense liquid from the pipette tip. The plunger is carried, for side-to-side shifting in unison with mounting block 112, on a second block 128 which is movable along a rod 130 parelleling screw 104 (Figure 3). As seen best in Figures 1 and 3, rod 130 is rigidly attached to a plunger-control bar 132 in the plunger mechanism through a pair of ears, such as ear 134, formed integrally with the bar. The bar is shiftable under the control of a pair of coordinantly actuable stepper motors 136, 138, mechanically linked to opposite sides of bar 132 by worm-drive linkages. These motors are connected to control unit 46 and respond to coordinated digitized signals from the unit in a pipetting operation. It can thus be appreciated that the pipette and plunger construction just described allows the pipette and associated plunger rod to be shifted simultaneously, in side-by-side directions, under the control of motor 118, and allows the plunger mechanism to be shifted within the pipette under the control of motors 136, 138 to effect the desired-volume sample withdrawal and dispensing.

A tip-release bar 139 in the pipette is mounted adjacent the lower face of block 112, for shifting between retracted and extended positions seen in Figures 2 and 8, respectively. The bar is attached to the lower end of a piston 141 which moves between a normally retracted position to an extended position upon actuation of a solenoid 143 (Figure 2). The solenoid is actuated by a suitable signal from control unit 46. The solenoid-actuated bar is also referred to herein as means for releasing an attached pipette tip.

System 10 has a pair of bar-code readers for matching sample tubes with corresponding groups of assay wells electronically. A tray bar-code reader 140 (seen in Figure 1) is mounted on frame 35, alongside a central side portion of table 16. The reader is positioned to read the bar codes, such as bar code 142, of the individual trays carried on the table, such as tray 22. It can be appreciated from Figures 1 and 8 that shifting the table to one of three different reading positions places the bar code on one of the three different trays on the table in registry with the reader, to allow the bar code to be read.

A sample tube bar-code reader 144 is mounted on the lower end region of sensor leg 104, in reading alignment with the bar code of a sample tube positioned in the sensing station, as seen in Figure 3. The bar code of tube 28 in the sensing station is indicated at 146. Readers 140, 144, are constructed conventionally for supplying digitized bar-code information to the microprocessor in the control unit. The manner in which the bar-code information is stored and used in the control unit will be described below with reference to Figure 10.

The operation of system 10 in performing a group of blood-typing assays on each of a plurality of different-volume blood samples will now be described. The assays are performed in one or more multi-well trays, such as trays 18, 20, 22, carried in preformed recesses formed in table 16, at the positions shown in Figure 1. Each tray, such as tray 22, has a rectangular array of assay wells, typically 8 rows of 12 assay wells each. The assay wells in a row in tray 22 are shown sectionally in Figures 3, 6, and 7 and are designated as wells $W_1$ - $W_{12}$, as indicated. As seen in Figure 3, the wells are vertically aligned with corresponding pipettes in assembly 54, for receiving assay reagents from the pipettes in a multi-well liquid handling step. The individual assay wells are cylindrical, flat- or U- or V-bottomed recesses formed in the tray, and have volumes typically between about 50 and 250 microliters.

A pipette/reagent tray 148 is provided with at least one row of disposable pipette tips, such as tips 150 which are adapted to be held, by friction fit, by the individual pipettes in pipette assembly 54. Tray 148 also provides one or more assay-reagent troughs, such as trough 152, where each trough is partitioned into twelve reagent containers, such as those designated $C_1$ - $C_{12}$ in Figure 4. The containers $C_1$ - $C_{12}$ are aligned with the 12 pipettes in assembly 54, to allow volume withdrawal from the containers simultaneously by the pipettes. Each container has a volume capacity typically between about 2 and 5 ml. In the particular blood-typing operation under consideration, the following blood-type assay reagents are added to containers:

## TABLE I

| Container | Reagent |
|---|---|
| $C_1$ | type $A_1$ blood cells |
| $C_2$ | type $A_2$ blood cells |
| $C_3$ | type B blood cells |
| $C_4$ | saline (plasma/serum control) |
| $C_5$ | --- |
| $C_6$ | anti-A serum antibody |
| $C_7$ | anti-B serum antibody |
| $C_8$ | anti-A,B serum antibody |
| $C_9$ | anti-D serum antibody (anti-Rh factor) |
| $C_{10}$ | saline (packed-cells/clot control) |
| $C_{11}$ | --- |
| $C_{12}$ | (packed-cell dilution) |

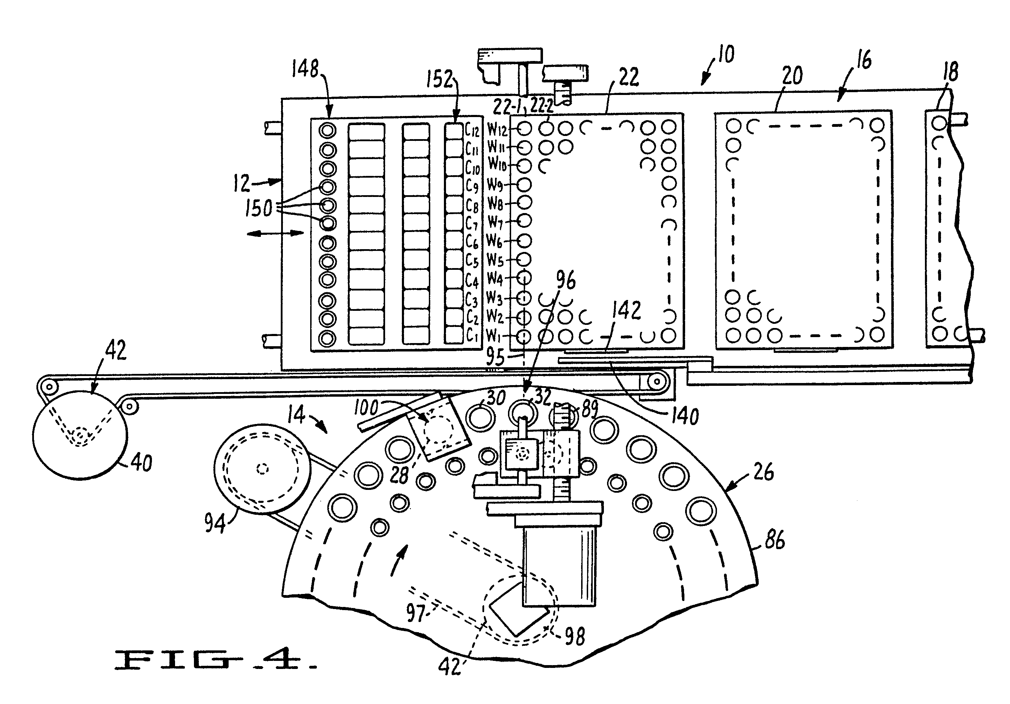

Initially, blood samples are obtained from each of the number of individual donors or recipients whose blood is to be typed, and each of the blood samples is added to a sample tube, such as tube 28, having a bar code, such as code 146. The blood samples are added to each tube to a final volume which is somewhat greater than about half the tube's total volume, to insure that the upper liquid level in the tube can be read by sensor 100. The samples are centrifuged conventionally to form either a lower packed-cell fraction and an upper plasma fraction in the presence of an anti-coagulant, or an upper serum and lower blood-clot fraction. An upper plasma fraction 156 and a lower packed-cell fraction 158 are shown for the blood sample in tube 32 in Figures 5-8, the operation of the system being described below with reference to blood samples treated with an anti-coagulant. The several sample tubes--and in the present embodiment, up to about 50 tubes--are placed in the sample holder, along with a corresponding number of disposable sample-transfer pipette tips. These tips have the general dimensions and tapered construction seen sectionally in Figure 2 and are preferably constructed of polyethylene or the like. In particular, the tips are constructed to receive the fitting of pipette 34 in their upper tapered region, for engaging the fitting by friction fit, and are dimensioned to extend into a lower portion of a sample tube, as shown, for withdrawing a lower fraction from the tube.

The user now initiates an automatic blood typing operation by instructing the control unit, through terminal 49, as to: the number of samples to be assayed; which of the wells in each row are to receive an upper plasma fraction aliquot and what sample quantity is to be dispensed in each well; which of the wells are to receive lower packed-cell fraction aliquots and what sample quantity is to be dispensed in each well; the amount of reagent to be disposed into each of the wells by the pipette assembly; and the hematocrit value or values which will be used in calculating sample interface levels in the samples. The user then initiates operation by a suitable signal to the control unit.

In the first step of the automated operation, motor 94 is activated to advance the tube holder through repeated increments until a first sample tube is positioned within sensing station 110. Here, the liquid level of the sample is detected by the system's sensor means, and the bar code on the tube is read and stored in a read-only memory in the control unit's microprocessor. For purposes of simplicity, this first tube will be referred to as sample no. 1, although it is of course associated in the control unit with a particular bar-code number.

Motor 94 is then actuated by control unit 46 to position the next sample tube, referred to herein as sample no. 2, at the sensing station, to allow the liquid height of this sample tube to be determined. The sample level and bar code are stored in the control unit's read-only memory, at a memory address associated with a second sample.

A third actuation of motor 94 brings the third sample tube (tube 28 in the figures) into the sensing station, and positions the first sample (tube 32) at the sample transfer position along the line of travel of the sample-transfer pipette. At this step, the system operates first to determine the liquid level of sample no. 3, associate that with a recorded bar code, and store the information in a read-only memory in the control unit.

In addition, the system now operates to carry out a sample-transfer operation on sample no. 1. The series of automated steps involved in such a sample-transfer operation are illustrated in the sectional/side views of Figures 5-8. In the initial step, pipette 34 is shifted, under the control of stepper motor 118 to place the pipette at a position immediately above disposable tip 92 which is radially adjacent sample 32. The head assembly is then moved in a downward direction, through the control of stepper motor 52, to engage the lower tapered end of the pipette fitting frictionally with the pipette tip, as shown in solid lines in Figure 5. With the pipette tip attached to the pipette, the head assembly is raised slightly and the pipette is shifted slightly to the right in Figure 5 to position the pipette tip directly above the sample tube, as indicated in dotted lines in the figure.

Looking at Figure 6, the head assembly is now shifted downwardly to insert the lower end of the pipette tip into the upper plasma fraction in the tube. The pipette tip is inserted into the upper plasma sample a preselected distance--for example, one cm--below the already-calculated liquid sample level in the tube. The pipette plunger mechanism is now activated by coordinated movement of motors 128, 130, to raise the plunger a distance which effects withdrawal of a preselected volume of the upper plasma fraction. The head assembly is again raised and the sample-transfer pipette shifted to the right to place the pipette tip directly over the first assay well ($W_1$). The head assembly is lowered to position the pipette as shown in dotted lines in Figure 6 where the lower end of the tip is received partially in the well. At this stage, the plunger mechanism is actuated to dispense a selected-volume aliquot in the first assay well. The pipette is now shifted, with up and down movement of the head assembly and successive shifting of the pipette to the right, to positions overlying each of the next three assay wells ($W_2$ - $W_4$), as indicated, with a preselected quantity of the sample being dispensed into each of these wells under the control of stepper motors 128, 130. The total operation described is effective to transfer a preselected quantity of upper plasma fraction to each of wells $W_1$ - $W_4$ in the row of wells seen sectionally in the figure.

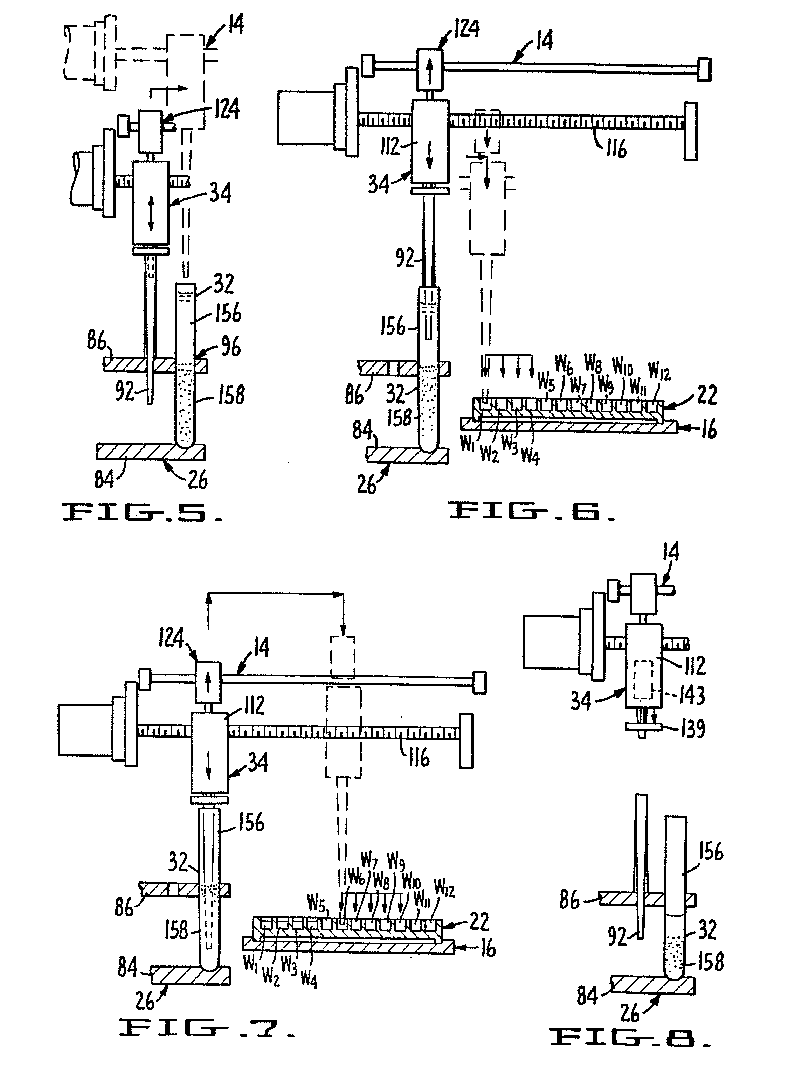

The operation of the system to transfer a lower packed blood fraction from the sample tube into the next five wells in the row is illustrated in Figure 7. In the first step, the head assembly is raised and shifted to the left to position the pipette tip immediately above the sample tube. The head assembly is now lowered to position the lower end of the pipette below the interface between the two sample fractions and preferably near the lower end of the sample tube. The positioning of the lower pipette tip is determined from a calculation based on the already-measured liquid level of the tube and a minimum hematocrit value specified by the user, as will be discussed below. A selected quantity of the lower packed-cell fraction is withdrawn into the pipette, by raising the plunger mechanism a selected distance, and a selected-volume (e.g., 20 microliters) of this sample is transferred to well $W_{12}$, which has been prepared to contain a preselected dilution volume (e.g., 180 microliters) of saline, and the diluted cell sample is mixed by withdrawing and dispensing the mixture several times with the pipette. The diluted cells are then transferred, by the same pipette tip, to each of wells $W_6$ - $W_{10}$, by successive movement of the pipette to the left in Figure 7, as indicated.

After a sample aliquot has been dispensed into the last assay well, the head assembly is raised and the pipette shifted to the left in the figures to the position shown in Figure 8, where the pipette is positioned directly over the opening which originally held the pipette tip used in the sample-transfer operation. To release the pipette tip, the head assembly is lowered until the pipette tip is partially received in the vacated opening, and solenoid 143 is activated, as indicated in the figure, to eject the pipette tip from the pipette. Alternatively, the tip is ejected into a waste receptacle located at the righthand side of the table.

The sample holder is now advanced one step, to place sample no. 2 in a position for sample transfer, and table 16 is shifted, under the control of motor 40, to advance tray 22 by one row of wells, to place the next row of wells in a position for receiving samples from the second tube. The sample transfer is performed exactly as described with respect to the first sample, using the fresh pipette tip adjacent the second sample to carry first the upper plasma fraction and then the packed-cell fraction into corresponding groups of assay wells in the second row of the tray. This procedure is repeated for the first eight sample tubes to distribute upper and lower sample fractions into assay wells corresponding to wells $W_1 - W_4$ and $W_6 - W_{10}$ in each of the eight rows in the tray.

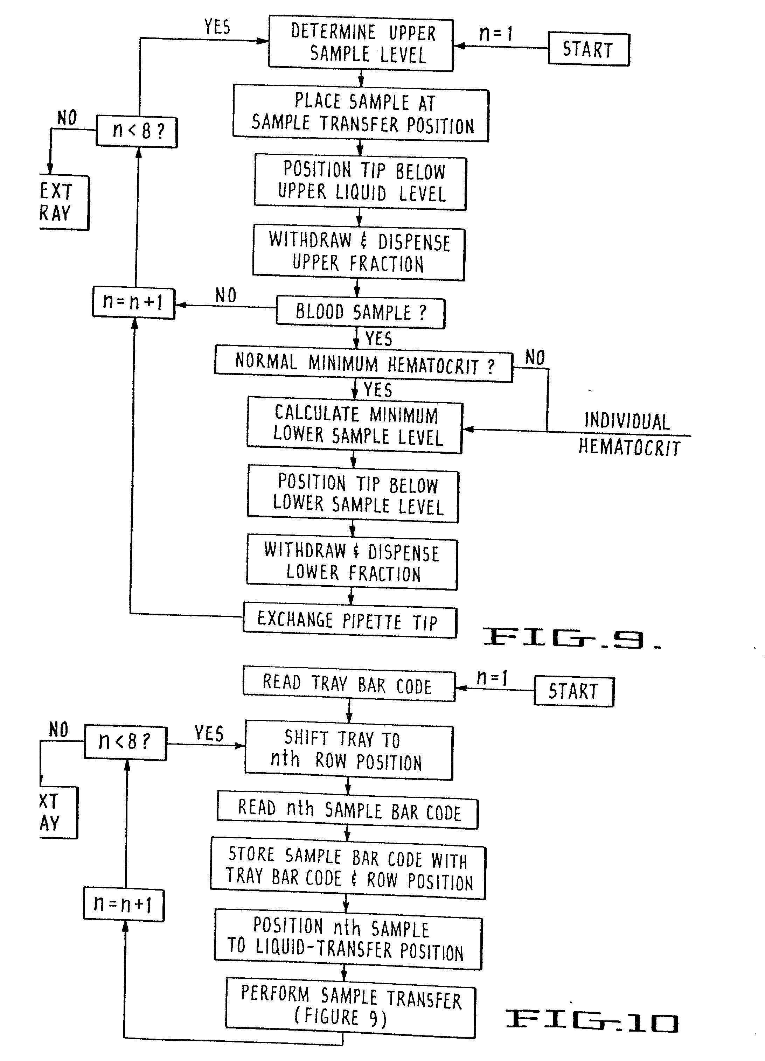

The logic steps carried out by the control unit, in a sample-transfer operation, are shown in Figure 9. The logic diagram shown in the figure is designed to carry the operation through eight samples, i.e., to transfer sample aliquots to one tray. Starting at the upper box in the figure, a counter is initially assigned a value of 1, corresponding to the sample number, and this counter number is associated with the sample level determined by the control unit from information received from sensor 100. The sample holder is advanced to place the first sample at the sample transfer position, and the head assembly is moved to place the tip a selected distance below the upper sample level, as described above. The sample liquid in the upper portion of the sample tube is dispensed into a first group of assay wells in the first row of the tray. For single-fraction samples, such as urine or cell-free blood fluid, the system proceeds to "process" the second sample in an identical fashion, and this procedure continues until the rows in one tray are filled.

If the control unit has been programmed to handle a blood sample, the microprocessor in the unit calculates, based on a specified hematocrit value, the expected level of the serum packed blood cell interface in the sample tube. The calculation may be based either on a single hematocrit value, typically a below-normal hematocrit value which is inputted into the control unit at the beginning of the system operation, or on individual hematocrit values which are inputted and applied separately to each sample. Normal hematocrit values range from about 40-60, that is, the packed-cell fraction makes up between 40%-60% of the total volume. Typically, when a single inputted hematocrit value is applied to cell samples, the selected value is a below normal hematocrit value of about 30. The calculation, either for a general or individually specified hematocrit value, involves multiplying the determined liquid level by the inputted hematocrit value, to yield the upper level of the packed-cell fraction. The calculating function, or means, in the control unit microprocessor for determining from the upper liquid level, and from the inputted hematocrit value, the upper level of the packed-cell fraction in each sample tube is shown in the fourth box from the bottom in Figure 9. The flow scheme shows that the calculation may be based either on a single below normal inputted value or a hematocrit value individually specified for each sample. After performing the interface-level calculation described, the system is operated to withdraw and dispense the lower fraction into the next group of wells in the first row, and exchange the contaminated pipette tip for a fresh one. The counter is then advanced by one and the cycle is repeated, until all eight tray rows have been filled, after which the unit shifts to a "next tray" step, for dispensing the next eight samples in the eight rows of the next tray. This procedure is continued until all of the samples have been transferred to separate rows in the trays and/or all of the trays have been filled.

During the just-described sample transfer operation, the system is also recording and storing bar code and table-position information which is used in matching sample tube numbers and corresponding assay rows in the trays. Figure 10 shows a flow diagram of steps performed in the system as part of the tube/assay row tracking operation. Initially, a tray/row counter is set to a counting position n=1, and the table is moved, under the action of motor 40, to place the first tray which is to receive samples, e.g., tray 22 in Figures 1 and 4, to a position allowing the tray's bar code to be read by reader 140. The bar-code information is inputted into control unit 46 and stored there in a read-only memory. The table is now shifted to place the tray in a position for receiving samples from pipette 34 in its first row of wells, e.g., the row indicated at 22-1 in Figure 4. Information about the table position is placed in the control unit's read-only memory, to identify the sample-receiving row as to tray bar code and row number. The system operates to read the sample bar code, then store this code with the tray bar code and tray row position in the memory. The storing function, which in essence associates sample bar-code and tray bar code and row number information in the read-only memory of the microprocessor, is also referred to herein as memory means, and is shown as the third box from the bottom in Figure 10. After the system positions the sample at the sample-transfer position and performs the sample transfer operation outlined above in Figure 9, the counter is increased by one and the cycle repeated. When all eight rows in the first tray have been filled, the system returns to the beginning of the operation where a bar code of the second tray--tray 20 in Figure 4--is read. The above procedure is repeated until all of the rows in the second tray have been filled and/or all of the samples have been transferred.

At the end of the sample-transfer operation, the read-only memory in the system has stored information associating each sample tube number with one of the eight rows in each of the bar code-identified trays. This information, which is stored until an entire group of blood assays is performed, may be supplied to a printer or a personal computer and/or a mainframe laboratory computer, to provide the user with a record of sample tube numbers associated with each row of tests in the several trays. Information may also be called up, on demand, on a screen in terminal 49, on a sample-by-sample basis.

At this stage, the serum and packed-cell fraction in each sample (up to 24 samples) have been transferred to the individual rows on the one or more trays. Specifically, each of the individual plasma fractions has been dispensed in wells corresponding to wells $W_1$ - $W_4$

in Figures 3, 4, 6 and 7, each in a separate row, and each of the individual, diluted packed-cell fractions has been dispensed in a group of wells corresponding to wells $W_6$ - $W_{10}$ in each row. The system is now operated to transfer separate assay reagents to each of the nine different sample-containing wells in each row. This operation involves, first, shifting the table to position the row of disposable pipette tips, such as tips 150, directly below the row of pipettes in pipette assembly 58, and lowering the head assembly to pick up the tips by friction-fit engagement with the pipettes. The pipette assembly, which is now equipped with fresh disposable pipettes, is lowered into trough 152 containing the particular group of assay reagents noted above in its first nine containers. The pipette assembly is operated, by means of a plunger mechanism 70, to withdraw a preselected quantity of liquid into each of the disposable pipette tips on the assembly. The pipettes may first be operated in an up-and-down mode to mix the individual reagents.

The head assembly is raised and the table shifted to position the first row of sample-containing assay wells below the pipette tips. The head assembly is then lowered to position the tips in the corresponding wells and the plunger mechanism actuated to deliver a preselected amount of reagent into each of the wells. The head assembly is raised, the table shifted to position the next row of wells below the head assembly, and the reagent-dispensing operation repeated in this manner until all of the rows have been filled with a preselected quantity of the reagent. Thus, at the conclusion of the reagent-dispensing operation, each well corresponding to well $W_1$ in Figure 3 contains a preselected quantity of the reagent in container $C_1$ in trough 152 (in the present examples, type $A_1$ blood cells); each well corresponding to well $W_2$ in Figure 3 contains the same preselected quantity of reagent material from container $C_2$ in trough 152, and so on.

The sample and reagent in each assay may be mixed initially or during incubation by moving the table in a back-and-forth shaking manner by suitable recurrent, alternating movement in motor 40. At the end of the assay period, each of the wells is examined for cell agglutination, according to conventional blood typing methods, to ascertain blood type in each of these samples. The wells are preferably analyzed by a multi-well microvolume spectrophotometer designed to detect agglutination in the wells. The spectrophotometer may be equipped with a microprocessor for determining sample blood type, from the agglutination data, and further equipped with a bar-code reader and row-position detector to correlate each determined blood type with a particular tray and row number. This information, in turn, can be correlated with the sample row position information from system 10, to provide a direct output which associates sample number with blood type.

It can be appreciated from the foregoing how various objects and features of the present invention are met. The system provides efficient and accurate transfer of small sample aliquots from each of a plurality of samples into corresponding groups of assay wells in a multi-well tray. As illustrated herein, the sample transfers may be made from large-volume samples. Further, successive samples are handled without having to flush or wash the sample transfer pipette between samples.

The liquid-transfer operation involves a liquid-level sensing step which may be carried out by optical, rather than resistivity, sensing. The nuisance associated with cleaning a resistivity probe after each sample-transfer operation is thereby avoided. A liquid-level calculation feature in the system is used, in conjunction with general or sample-specific hematocrit values supplied to the system, to calculate the interface between upper and lower packed-cell fractions in centrifuged blood-cell samples. An advantage of this feature is that the lower fraction can be withdrawn without having to insert the pipette fully into the sample tube, minimizing the risk of sample spillover which may occur when the tip is inserted too far into a nearly full sample tube. Also the calculation feature avoids the need for more complex sensing systems designed to differentiate between an upper serum or plasma fraction (which may be quite opaque) and a lower cell fraction.

The various sample fractions, once they have been dispensed to associated groups of wells in one or more multi-well trays, are readily assayed by a multi-pipette liquid-handling operation capable of dispensing each of a number of different selected assay reagents simultaneously into the groups of wells holding each of the different sample fractions. Moreover, the system allows different groups of disposable pipette tips to be picked up and ejected automatically, where it is desired to dispense more than one group of reagents into one or more of the reagent wells.

Finally, the system provides for automatic tracking between each of a number of different sample tubes and the corresponding trays and tray rows in which multiple assays have been carried out. This electronic tracking between sample tube and assay result reduces the time the user must spend in carrying out the test and compiling test results, and also reduces the risk of clerical error which is inherent in a procedure where multiple assays are being performed on each of a number of samples.

WHAT IS CLAIMED IS:

1. A liquid-handling system having a horizontally shiftable table for supporting a multi-row array of assay wells, means for shifting the table to selected liquid-transfer positions, a vertically shiftable head assembly carrying plural fixed position pipettes for transferring preselected liquid volumes to the wells in a row in such array, and means for shifting the head assembly to selected liquid-handling positions, characterized in that the system contains an apparatus for use in performing multiple assays on each of a plurality of samples, characterized by

a shiftable sample holder adapted to hold an array of such samples,

means for shifting the sample holder to place successive samples held therein at a selected sample-transfer position,

a sample-transfer pipette mounted on said head assembly for shifting between such sample transfer position and positions adapted for dispensing the sample successively into one or more of the wells in such an array,

means for shifting the sample-transfer pipette between such positions, and

controlling means operatively connected to the shifting means for the table, head assembly, sample holder, and sample-transfer pipette, to effect transfer of a selected volume of each said sample to one or more selected wells in the well array, with such supported on the table.

2. A liquid-handling system according to claim 1, characterized in that the sample holder in the apparatus is further adapted to support an array of disposable pipette tips, where each tip is adapted to be attached to the sample-transfer pipette by friction fit, upon downward movement of the head assembly when the pipette and corresponding tip assembly are vertically aligned, and said sample-transfer pipette further includes means adapted to release the attached tip.

3. A liquid-handling system according to claims 1 or 2 characterized in that the sample holder is a rotatable holder adapted to hold such samples in a circular array.

4. A liquid-handling system according to any one of claims 1-3 for use in performing assays on multiple, variable-volume samples in sample tubes which is further characterized by a sensor means for detecting the level of each sample, wherein said controlling means is operatively connected to the sensor means for controlling the position of said head assembly, during a sample-transfer operation, in response to the sample level detected by the sensor means.

5. A liquid-handling system according to any one of claims 1-4 for use in performing assays on blood samples, each composed of an upper fraction and a lower, blood-cell fraction, characterized in that said controlling means includes means for calculating, for each sample, based on the detected level of the sample and on a preselected upper/lower fraction ratio, the head assembly positions which permit sample withdrawal separately from the upper and lower cell fractions of each sample.

6. A liquid-handling system for performing multiple assays on each of a plurality of samples characterized by

a table mounted for shifting along a path extending in a generally front-to-back direction,

a sample holder mounted for rotation adjacent one side of the table,

a head assembly mounted above said table for vertically shifting with respect thereto,

a sample-transfer pipette mounted on said assembly for shifting in a generally side-to-side direction between positions directly above the holder and the table,

shifting means associated with said table, sample holder, head assembly, and sample-transfer pipette, for shifting each of these to desired positions, and

means operatively connected to said shifting-means for controlling the movement of said table, holder, head assembly and pipette to effect transfer of a defined volume of each sample supported in said holder to at least one of a group of side-by-side wells in a row of wells supported on said table.

7. A liquid-handling system according to claim 6 further characterized by a plurality of side-by-side pipettes in said head assembly, each adapted to dispense a given quantity of a selected assay reagent fluid to each of the wells in such a row.

8. A liquid-handling system according to claim 6 or 7 further characterized in that the sample holder is adapted to hold a circular array of disposable pipette tips, where each tip is adapted to be attached to the sample-transfer pipette by friction fit, upon downward movement of the head assembly when the pipette and corresponding tip assembly are vertically aligned, and said pipette is further characterized by means adapted to release the attached tip.

9. A liquid-handling system adapted to transfer an upper fraction and a lower blood-cell fraction from each of a plurality of blood samples contained in sample tubes at various sample levels, by means of a sample-transfer pipette whose tip is shiftable to a selected level within each sample tube, characterized in that the system has a tip-positioning mechanism characterized by

a sensor for detecting the upper liquid level in each sample tube,

means for calculating, for each sample, based on the detected level in a sample, and on a preselected upper/lower fraction ratio, the approximate interface level between the upper and lower fractions in the sample, and

means for shifting said pipette, in response to information about such interface level, to position the pipette tip a selected distance below such interface level.

10. A liquid-handling system according to any of claims 4, 5 and 9 characterized in that the sensor is an optical sensor.

FIG.1.

0185330

FIG.2.

0185330

FIG.3.

FIG.4.

FIG.5.

FIG.6.

FIG.7.

FIG.8.

0185330

FIG.9.

FIG.10